# EUROPÄISCHE PATENTSCHRIFT

(11) **EP 0 855 933 B1**
(45) Veröffentlichungstag und Bekanntmachung des Hinweises auf die Patenterteilung: **23.06.1999**
(21) Anmeldenummer: 96932560.4
(22) Anmeldetag: 18.09.1996
(51) Int. Cl.: B01J 20/34

(54) **VERFAHREN ZUM REGENERIEREN VON GEBRAUCHTEN ANORGANISCHEN ADSORBENTIEN SOWIE VERWENDUNG DER REGENERATE**
METHOD OF REGENERATING USED INORGANIC ADSORBENTS AND USE OF THE REGENERATED MATERIAL
PROCEDE DE REGENERATION D'ADSORBANTS INORGANIQUES AYANT DEJA SERVI ET UTILISATION DU PRODUIT REGENERE

(30) Priorität: 04.10.1995 DE 19536992
(43) Veröffentlichungstag der Anmeldung: 05.08.1998
(73) Patentinhaber: SÜD-CHEMIE AG, D-80333 München (DE)
(72) Erfinder: EBERT, Hermann, D-84036 Landshut (DE); FLESSNER, Uwe, D-81375 München (DE); HÄHN, Reinhard, D-84186 Vilsheim (DE); SIMMLER-HÜBENTHAL, Hubert, D-85368 Moosburg (DE); ZSCHAU, Werner, D-82237 Steinebach (DE)
(74) Vertreter: Patentanwälte Dipl.-Ing. R. Splanemann Dr. B. Reitzner Dipl.-Ing. K. Baronetzky
(86) Internationale Anmeldenummer: EP9604086
(87) Internationale Veröffentlichungsnummer: WO9712669

(56) Entgegenhaltungen:
- EP-A- 0 529 555
- DE-A- 4 330 274
- GB-A- 590 244
- US-A- 5 348 921

## Beschreibung

Die vorliegende Erfindung betrifft ein Verfahren zum Regenerieren von gebrauchten anorganischen Adsorbentien, wie Bleicherden bzw. synthetisch hergestellte Adsorbentien, wobei dem Adsorbens anhaftende kohlenstoffhaltige (insbesondere orgonische) Reststoffe durch thermische Behandlung in einer Wirbelschicht oxidiert und von dem Adsorbens entfernt werden, sowie die Verwendung des auf diese Weise hergestellten Regenerats zur Behandlung von Ölen, Fetten oder Wachsen.

Glyceridöle, Wachse und Fette sowie mineralische Öle durchlaufen während ihrer Raffination mit anorganischen Adsorbentien ein bis mehrere adsorptive Behandlungsschritte. Dabei wird das zu behandelnde Öl oder Fett bei erhöhten Temperaturen mit einem anorganischen Adsorbens kontaktiert. Das Adsorbens hat dabei die Aufgabe, die bei nachfolgenden Prozessen oder für eine Lagerung nachteiligen Substanzen, wie z.B. Pigmente, Phospholipide, Trübstoffe, Metalle, freie Fettsäuren, oxidierte Verbindungen etc. aus dem Öl Zu entfernen. Das Adsorbens benötigt hierzu adsorptive Eigenschaften, z.B. zur Entfernung von Phospholipiden oder Chlorophyll-Körpern, und katalytische Eigenschaften, z.B. zum Abbau von Farbstoffen oder im Öl enthaltenen peroxidischen Verbindungen. Das beladene Adsorbens wird anschließend abfiltriert. Aufgrund seines Gehaltes an adsorbierten Materialien, sowie anhaftenden Öls, kann es in der Regel ohne eine Weiterbehandlung nicht wiederverwendet werden.

Als Adsorbentien für die Ölraffination werden aktivierte oder nicht aktivierte Tonmineralien, wie z.B. Montmorillonit, Palygorskit, Beidellit, Saponit, Hectorit oder Halloysit, in der Alkali- oder Erdalkaliform, sowie synthetische Silicate, Aluminiumsilikate, Metalloxidsilikate sowie gemischte Metalloxidsilikate verwendet. Im folgenden werden diese Adsorbentien der Einfachheit halber als "Bleicherden" bezeichnet. Ferner werden die den Adsorbentien anhaftenden kohlenstoffhaltigen Reststoffe der Einfachheit halber als "Öle" bezeichnet.

Gebrauchte Bleicherden sind geprägt von ihrem hohen Ölanteil, der zwischen 25 und 40 Gew.-% liegt. Die Entsorgung erfolgt z.B. durch Verwendung als Energieträger bei der Zementherstellung oder durch Deponierung. Während die unkontrollierte Verbrennung wegen der dabei resultierenden hohen Abgasbelastung, besonders bei der Verwertung von gebrauchten Bleicherden aus der Altöl-Raffination, Probleme bereitet, ist bei der Deponierung die potentielle Grundwassergefährdung zu beachten. Wegen der dabei verursachten Umweltbelastungen stoßen diese Arten der Entsorgung in neuerer Zeit zunehmend auf Ablehnung. Daneben stehen die gesetzlichen Forderungen zur stofflichen Nutzung bzw. Wiederverwendung von Rest- und Wertstoffen.

Aus diesen Gründen fehlte es nicht an Bemühungen, gebrauchte Bleicherde zu regenerieren und wieder als leistungsfähiges Adsorbens der ölverarbeitenden Industrie zur Verfügung zu stellen.

Aus der DE-A-194 758 ist ein Verfahren zur Regeneration von gebrauchten Bleicherden aus der Altölraffination bekannt. Hierbei wird die gebrauchte Bleicherde mit organischen Lösungsmitteln von ihren löslichen Bestandteilen durch Extraktion befreit. Das so erhaltene Material wird dann bei Temperaturen zwischen 350 und 550°C im Wirbelbett geröstet. Bei einer anschließenden Säurebehandlung des Materials, sowie einer Salzentfernung durch Waschen wird ein Material erzeugt, das wieder zur Altöl-Bleichung herangezogen werden kann. Neben dem komplizierten, mehrstufigen Verfahren werden bei der Extraktion aber lösungsmittelhaltige Abfälle erzeugt, die wegen der Toxizität ihrerseits schwer entsorgbar sind, bzw. einer eigenen Regenerationseinheit bedürfen. Weiterhin verlaufen die Extraktionsschritte gewöhnlich sehr langsam, wodurch die Kapazität einer Regenerationsanlage beschränkt wird. Durch die Säurebehandlung mit anschließendem Waschen werden unerwünschte, saure Metallsalz-Lösungen erzeugt, die erst nach der Neutralisation entsorgt werden können. Es resultieren dabei aber immer wäßrige Abwasserströme mit hoher Salzfracht. Ein ähnliches mehrstufiges Verfahren mit analogen Nachteilen ist aus der DE-A-16 45 834 bekannt.

Auch die DE-A-4 330 274 beschreibt ein ähnliches Verfahren zur Regenerierung von Bleicherde, die bei der Raffination von vegetabilischen Ölen eingesetzt wurde, wobei nach einer vorgeschalteten Extraktion die gebrauchte Bleicherde bei 500 bis 650°C calciniert wird. Eine Wirbelschichtregeneration ist nicht erwähnt. Um ausreichende Bleichaktivität herzustellen, wird das so erhaltene Produkt mit geringen Menge Säure behandelt. Auch in diesem Fall ist das zur Regeneration notwendige Verfahren mehrstufig. Außerdem wird bei der Extraktion in der Regel Öl minderer Qualität freigesetzt. Weiterhin bleibt das Problem der Entsorgung von kontaminierten organischen Lösungsmitteln.

Nach einem in der DD-A-109 605 beschriebenen Verfahren wird die Regenerierung der gebrauchten Bleicherde nur durch thermische Behandlung bei ca. 750°C im Drehrohrofen durchgeführt. Die erhaltenen Regenerate wurden zur Bleichung von Mineralölen mit sehr hohen Bleicherde-Dosierungen eingesetzt und erreichten Bleichaktivitäten zwischen 90 und 100% der Ausgangsbleicherde. Die hohe Bleicherdedosierung dient unter anderem dazu, Aktivitätsunterschiede zu frischer Bleicherde auszugleichen.

In der DE-A-33 44 228 ist eine Vorrichtung und ein Verfahren zur Regeneration von gebrauchten kohlenstoffhaltigen Adsorptionsmitteln, insbesondere von Aktivkohle beschrieben. Die gebrauchte Aktivkohle wird bei 700-950°C in einer sauerstofffreien wasserdampfhaltigen Atmosphäre regeneriert.

Aus der EP-A-0 529 555 ist ein weiteres rein thermisches Regenerationsverfahren bekannt. Die gebrauchte Bleicherde wird hierbei einer oxidativen Behandlung in einem Wirbelbett unterzogen, wobei die organischen Reststoffe in der gebrauchten Bleicherde durch einen Sauerstoffüberschuß vollständig oxidiert werden. Die verbrauchte Bleicherde und das sauerstoffhaltige Gas werden durch ein stationäres Fließbett mit einem inerten körnigen Material geleitet. Die Temperatur im freien Gasraum über dem Wirbelbett (freeboard) beträgt weniger als 1000°C, wobei aber die Temperatur im freien Gasraum maximal um 100°C höher sein soll als die Temperatur im Wirbelbett. Die bevorzugte Temperatur im Wirbelbett liegt zwischen 350 und 700°C, wobei die Temperatur im Wirbelbett durch eingebaute Wärmeaustauscher geregelt werden kann. Im freien Gasraum findet keine Temperaturregelung mehr statt. Nach dem Beispiel wird die Temperatur im Wirbelbett auf etwa 730°C eingestellt; sie steigt aufgrund der weiteren Oxidation der organischen Reststoffe im freien Gasraum auf 812°C an.

Das nach diesem Verfahren gewonnene Bleicherdematerial wird zur Phospholipid-Entfernung verwendet, besitzt aber nur etwa 67% der Adsorptionskapazität der frischen Bleicherde. Die Verwendbarkeit des Materials zur Entfärbung von Ölen, der eigentlichen Stärke von Bleicherden auf Tonmineralbasis, wird nicht erwähnt.

Die hier beschriebenen Verfahren führen über mehrstufige Prozesse bzw. mittels Hochtemperaturbehandlung zu regenerierten Bleicherden. Aus der Arbeit von Schulz in "Angew. Chem." 49 (1936) 74, ist bekannt, daß bereits bei einer thermischen Belastung von etwa 150°C Aktivitätsverluste bei Bleicherden zu verzeichnen sind. Aus "Ullmanns Enzyklopädie der Technischen Chemie", 3. Auflage, Bd. 4, Seite 544 ist bekannt, daß bereits bei Temperaturen von 300 bis 400°C die Kristallstruktur, und somit die damit korrellierte Bleichaktivität, zerstört wird. Es ist daher zu vermuten, daß bei den hier angewendeten thermischen Verfahren zumindest ein teilweise Zerstörung der Bleichaktivität eintritt.

Geringe Temperaturbelastungen können bei reinen Extraktionsprozessen realisiert werden. Die GB-A-2 189 233 beschreibt ein Verfahren, das gebrauchte Bleicherde durch Waschen mit Aceton oder Methylethylketon von anhaftenden Ölanteilen befreit. Die entölte Bleicherde wird dann bei Temperaturen von 60°C von anhaftendem Lösungsmittel befreit. Nach diesem Verfahren wird eine Bleicherde mit deutlich verringerter Aktiviät im Vergleich zu frischer Bleicherde erzeugt.

Die Extraktion von gebrauchter Bleicherde mit überkritischem Kohlendioxid wird z.B. in der DE-A-4 002 161 und von C. Waldmann in Fat Sci. Technol. 3 (1992) 112 beschrieben. Neben den hohen technischen Anforderungen ist die lange Extraktionsdauer von Nachteil. Die mit dieser Methode erhaltenen Bleicherde-Regenerate besitzen etwa 50-75% der Bleichaktiviät der Ursprungsbleicherde, da das Lösungsmittel nicht in der Lage ist, alle der Bleicherde anhaftenden Verunreinigungen zu entfernen.

Einen anderen Weg der Regeneration beschreibt die sogenannte nasse Wiederaufarbeitung gebrauchter Bleicherde. So besteht der aus EP 0 611 071 bekannte Prozeß aus drei technisch aufwendigen Teilschritten. Zunächst wird die gebrauchte Bleicherde mit organischen Lösungsmitteln unter Schutzgas und Druck bei 180°C extrahiert, und anschließend im Autoklaven unter Zusatz von Sauerstoff bzw. Peroxid-Verbindungen oxidiert. Eine anschließende Säurebehandlung bringt die Aktivität der Bleicherde auf etwa 98% des Ausgangsmaterials zurück. Neben der komplizierten Autoklaven-Technik werden hier neue Abwasserströme erzeugt, die ihrerseits ordnungsgemäß entsorgt oder aufbereitet werden müssen.

Aufgabe der hier vorliegenden Erfindung war es, ein einstufiges Regenerationsverfahren für gebrauchte anorganische Adsorbentien, wie Bleicherde, sowohl aus der Mineralöl-Bleichung als auch aus der Glyceridöl-Bleichung bereitzustellen. Das Regenerat sollte alle Eigenschaften einer frische Bleicherde besitzen. So sollten vor allem neben den adsorptiven auch die katalytischen Eigenschaften der Bleicherde erhalten bleiben.

Die gestellte Aufgabe wird mit Hilfe eines Verfahrens zur Regeneration von gebrauchten anorganischen Adsorbentien, wie Bleicherde bzw. synthetisch hergestellten Adsorbentien und Bleicherde-Aktivkohlemischungen gelöst, wobei die den Adsorbentien anhaftenden kohlenstoffhaltigen Reststoffe (organische Reststoffe bzw. Aktivkohle oder andere kohlenstoffhaltige Materialien, wie Pyrolyse-Kohlenstoff) durch thermische Behandlung in einer ein inertes körniges Material enthaltenden Wirbelschicht bei Temperaturen unterhalb 1000°C oxidiert und von dem Adsorbens entfernt werden, worauf das regenerierte Adsorbens von dem körnigen inerten Material abgetrennt wird; das Verfahren ist dadurch gekennzeichnet, daß man die Temperatur im Wirbelbett auf etwa 600 bis 700°C und die Temperatur im freien Gasraum auf eine Temperatur, die die Temperatur im Wirbelbett nicht überschreitet, einstellt.

Überraschenderweise hat sich herausgestellt, daß bei diesen streng eingehaltenen Behandlungstemperaturen von 600-700°C, bevorzugt 630 bis 600°C, besonders 650°C keine thermische Schädigung der Bleicherde eintritt, aber der Abbau der organischen Materialien hinreichend gewährleistet ist, was bei Temperaturen unterhalb 600°C im Wirbelbett nicht der Fall ist.

Mit dem erfindungsgemäßen Verfahren ist es nun möglich, gebrauchte Bleicherden zu regenerieren, ohne Verluste in der Aktivität bei den Adsorptions- als auch bei den katalytischen Prozessen in der Ölbehandlung hinnehmen zu müssen.

Als inertes körniges Material für die Wirbelschicht wird im allgemeinen Sand mit einer optimierten Korngrößenverteilung verwendet.

Vorzugsweise wird die Temperatur im Wirbelbett auf etwa 630 bis 680°C, insbesondere auf etwa 650°C eingestellt.

Vorzugsweise stellt man die Temperatur im freien Gasraum auf eine Temperatur unterhalb der Temperatur im Wirbelbett ein, insbesondere auf eine Temperatur, die um bis zu 150 bis 50°C niedriger ist als die Temperatur im Wirbelbett.

Das Adsorbens kann mehrmals im Wirbelbett rezirkuliert werden. Wegen der sehr niedrigen Aktivitätsverluste bei der Regeneration sind mehrfache Regenerationscyclen möglich.

Weiterhin kann man das regenerierte Adsorbens nach erneutem Einsatz bei der Adsorption mehrfach regenerieren.

Man kann auch gebrauchte Adsorbentien verwenden, von denen die anhaftenden kohlenstoffhaltigen Reststoffe durch Extraktion und/ oder Pyrolyse teilweise entfernt worden sind. Es können also alle Bleicherden, unabhängig von der Vorbehandlungsmethode in den Prozeß eingeschleust werden. So können unbehandelte, extrahierte oder pyrolysierte Bleicherden sowie Bleicherde/Aktivkohle-Gemische regeneriert werden. Auch die Regeneration von gebrauchten Bleicherden, die zur Vermeidung der Selbstentzündung mit Wasser oder Flammhemmern versetzt wurden, kann durchgeführt werden.

In das Wirbelbett und/oder in den freien Gasraum können Oxidationsmoderatoren, wie Wasserdampf, eingeführt werden. Wasser reagiert mit den organischen Reststoffen bzw. den Kohlenstoffanteilen der gebrauchten Bleicherde im Sinne eines "Wassergas-Gleichgewichts" unter Erzeugung von CO, welches seinerseits einer allzu heftigen Oxidation entgegenwirkt. Daneben wird durch das Verdampfen des Wasser ein Kühlung der Bleicherde-Partikel erreicht. Der entstehende Dampf kann als Frischdampf oder Prozeßdampf verwendet werden.

Die Prozeßsteuerung läuft einzig über die Temperaturkontrolle. Als Temperatur-Regulantien stehen die Menge der zugeführten, gebrauchten Bleicherde, die Menge an zugeführten Verbrennungssauerstoff, sowie die Wärmeaustauscherleistung oder der Einsatz von Oxidationsmoderatoren zur Verfügung. Vorzugsweise stellt man die Temperatur im freien Gasraum und/oder im Wirbelbett durch Wärmeaustauscher oder durch Regelung des Sauerstoffgehalts ein.

Weiterhin können Bleicherden, die zur Adsorption von Hydriermetallen der Fetthärtung eingesetzt wurden, nach dem erfindungsgemäßen Verfahren regeneriert werden. Solche Bleicherden können Schwermetalle, wie z.B. Nickel enthalten. Durch die oxidative Behandlung werden diese Metalle in für den Bleichprozeß unschädliche Oxide umgewandelt. Wenn man diese Oxide entfernen will, kann man das regenerierte Adsorbens einer Säurebehandlung unterziehen. Hierbei erhöht sich auch die BET-Oberfläche und damit die Adsorptionswirkung der Bleicherde.

Die nachstehenden Beispiele sollen die Erfindung erläutern und die Vorteile gegenüber dem Stand der Technik aufzeigen. Die Erfindung ist aber nicht auf die Beispiele beschränkt.

### Vergleichsbeispiel 1

Gebrauchtes Tonsil Optimum® 210 FF (Hersteller Süd-Chemie) aus der industriellen Glyceridöl-Raffination mit einem Kohlenstoffgehaltvon 29,8% wurde gemäß EP-A-0 529 555 in der Wirbelschicht regeneriert.

Dazu wurde eine Regenerationsapparatur mit einer Höhe von 5,0m und einer Querschittsfläche von 0,20m² verwendet. Der Reaktionsraum war mit Quarzsand (Partikelgröße 0,7 bis 1,0mm) derart gefüllt, daß die statische Betthöhe 1,2m betrug. Von unten wurde auf 200°C vorgeheizte Luft zur Fluidisierung des Sandbettes eingeblasen. Die Strömungsgeschwindigkeit, bezogen auf den leeren Reaktor betrug 1,0m/s. Im Bereich des fluidisierten Bettes (Wirbelbett) war ein wahlweise mit Luft oder mit Wasser/Glykol gekühlter Wärmeaustauscher mit einer effektiven Fläche von 0,141m² installiert. Die gebrauchte Bleicherde wurde mit einer Rate von 27,0kg/h kontinuierlich zugeführt. Zum Starten der Reaktion wurde durch Einblasen von heißer Fluidisierungsluft, sowie durch direktes Beheizen des Sandes mit einem Ölbrenner die Temperatur des fluidisierten Sandbettes auf 600°C angehoben. Aufgrund der exothermen Reaktion bei der Behandlung der gebrauchten Bleicherde ist ein weiteres Heizen nach dem Anfahren des Reaktors nicht notwendig.

Nach Erreichen eines stationären Betriebszustandes wurde die Temperatur im Bett zu 740°C, die im Gasraum zu 820°C bestimmt. Während des stationären Betriebes wurden mehrer Proben der Regenerate über einen Zeitraum von 2h gesammelt und unter gutem Durchmischen vereinigt.

### Vergleichsbeispiel 2

Es wurde das in der DD-A-109 605 beschriebene Verfahren nachgearbeitet. Dabei wurde gebrauchtes Tonsil Optimum® 210 FF in einem um 1° geneigten Drehrohrofen mit einem Durchmesser von 25 cm und einer beheizbaren Länge von 2,20 m behandelt. Die Ofentemperatur wurde auf 850°C eingestellt und kontinuierlich 5 kg/h gebrauchte Bleicherde zugeführt. Tangential wurden 14,5 m³/h Luft zugeleitet. Die Bleicherdeschichthöhe im Ofen betrug ca. 5cm, die Verweilzeit 30 min.

### Beispiel 1

### Regenerierung von Tonsil Optimum® 210 FF im Wirbelbett bei verschiedenen Temperaturen

Gebrauchtes Tonsil Optimum 210® FF, mit einem Kohlenstoffgehalt von 29,5%, wurde in der Wirbelschicht, wie im Vergleichsbeispiel 1 beschrieben, regeneriert. Im freien Gasraum befand sich jedoch ein zusätzlicher Wärmeaustauscher mit einer effektiven Oberfläche von 0,457 m², der ebenfalls mit Luft oder einem Wasser/Glykol-Gemisch gekühlt werden konnte. Die Bleicherde-Aufgabemenge betrug 22,0 kg/h. Die Temperaturen im Wirbelbett und im freien Gasraum wurde durch Regelung der durch die Wärmeaustauscher stömenden Kühlmittelmenge auf die gewünschten Temperaturen eingestellt. Nach Erreichen des stationären Betriebszustandes wurden über einen Zeitraum von 2 Stunden mehrere Proben gezogen und unter intensiver Vermischung vereinigt.

Die Versuche a) und b) wurde derart durchgeführt, daß die Temperaturen im Wirbelbett mit den Temperaturen im Gasraum identisch waren.

Während des Versuches c) wurde die Wärmeabfuhr im Gasraum derart erhöht, daß bei einer Wirbelbett-Temperatur von 650°C, die Temperatur im Gasraum auf 590°C gesenkt werden konnte.

**Tabelle I**

| Temperaturkontrollierte Regenerierung von gebrauchtem Tonsil Optimum® 210 FF in der Wirbelschicht | | |
|---|---|---|
| Probe | Wirbelbett-Temperatur °C | freie Gasraum-Temperatur °C |
| Versuch a) | 700 | 700 |
| Versuch b) | 650 | 650 |
| Versuch c) | 650 | 590 |

Die Droben der derart regenerierten Bleicherden, sowie der Regenerate aus den Vergleichsbeispielen 1 und 2 wurden analysiert. Es wurde dabei die BET-Oberfläche, sowie der C-Gehalt der Proben bestimmt. In Tabelle II sind die Analysendaten im Vergleich zu denen von frischem Tonsil Optimum® 210 FF angegeben.

**Tabelle II**

| Physikalische Analyse der Regenerate (Tonsil Optimum® 210 FF) | | | |
|---|---|---|---|
| Probenbezeichnung | BET-Oberfläche* m²/g | BET-Oberflächen Verlust (%) | C-Gehalt** [Gew.%] |
| To.opt.® 210FF frisch | 260 | - | - |
| Vergleichsbeispiel 1 | 107 | 58,8 | 0,4 |
| Vergleichsbeispiel 2 | 39 | 85,0 | 7,1 |
| Beispiel 1 Versuch a) | 173 | 33,5 | 1,1 |
| Beispiel 1 Versuch b) | 212 | 18,5 | 0,9 |
| Beispiel 1 Versuch c) | 251 | 3,5 | 1,5 |

| | | | |
|---|---|---|---|
| * BET-Oberfläche: Stickstoffadsorption nach DIN 66131, Micromeritics ASAP 2010 | | | |
| **C-Gehalt: automatische CHNS-Analyse, Leco 932 | | | |

Auffällig ist der hohe Kohlenstoff-Restgehalt bei der Regereration im Drehrchrofen bei 850°C. Bei dieser sehr hohen Temperatur scheint eine Veralasung der Bleicherdepartikel stattzufinden, die einen effektiven Kohlenstoffabbau verhindert. Bei der Regeneration im Wirbelbett werden dagegen Materialien mit niedrigen Restkohlenstoffgehalt erhalten.

Hinsichtlich der BET-Oberfläche machen diese Versuche deutlich, daß bei Temperaturen über 650°C eine signifikante Abnahme der Oberflache gegenüber frischer Bleicherde zu verzeichnen ist. Bei einer Wirbelschicht-Temperatur von 650°C und einer Temperatur von 590°C im freien Gasraum ist der Oberflächenverlust am geringsten.

### Anwendungsbeispiel 1

### Bleichung von Rapsöl

Mit den regenerierten Bleicherden nach Beispiel 1 und den Vergleichsbeispielen 1 und 2 wurde Rapsöl gebleicht. Folgende Bleichbedingungen wurden gewählt:

Das Öl wurde auf 110°C erwärmt und mit 1,0 Gew.% Bleicherde unter Rühren versetzt. Anschließend wurde der Druck im Reaktionsgefäß auf 65 mbar erniedrigt und 30 min weitergerührt. Danach wurde das Vakuum gebrochen, und Öl und Bleicherde wurden durch Filtration voneinander getrennt. Die Ergebnisse der Ölanalyse sind in Tabelle III zusammengefaßt und mit der Bleichwirkung einer frischen Bleicherde verglichen.

**Tabelle III**

| Ranpsölbleichung mit regeneriertem Tonsil Optimum 210® FF (Vakuumbleichung) | | | | | | | | |
|---|---|---|---|---|---|---|---|---|
| Bleicherde | Lovibond PFX 990 5 1/4''¹⁾ | | Chl.A² ppm | POZ³ | P⁴ ppm | Fe⁵ ppm | Mg⁵ ppm | Ca⁵ ppm |
| | rot | gelb | | | | | | |
| ungebl., filtr. | 3,4(1'') | 70(1'') | 3,65 | 14,6 | 62 | 1,3 | 3,8 | 16,5 |
| To.Optimum®210 FF | 2,3 | 39 | 0,08 | 0,9 | 16 | 1.1 | 1,8 | 8,7 |
| Vergl.Beisp.1 | 4,7 | 70 | 0,65 | 8,5 | 26 | 1,2 | 2,3 | 11,7 |
| Vergl.Beisp.2 | 7,9 | 70 | 0,75 | n.b. | 29 | 0,9 | n.b. | n.b. |
| Beisp.1 (Vers.a) | 3,8 | 70 | 0,49 | 0,2 | 15 | 1,1 | 1,8 | 8,0 |
| Beisp.1 (Vers.b) | 2,5 | 70 | 0,21 | 3,2 | 13 | 1,0 | 1,7 | 7,4 |
| Beisp.1 (Vers.c) | 2,4 | 51 | 0,17 | 2,8 | 12 | 0,8 | 1,5 | 7,1 |

| | | | | | | | | |
|---|---|---|---|---|---|---|---|---|
| ¹⁾ Farbzahl in Ölen (Lovibond): AOCS-Methode Cc 13b-45 | | | | | | | | |
| ²⁾ Chlorophyll A-Bestimmung in Ölen: AOCS-Methode Cc 13d-55 | | | | | | | | |
| 3) Peroxid Zahl in Ölen: DGF-Einheitsmethode F-I-3b (84) | | | | | | | | |
| ⁴⁾ Phosphor-Bestimmung in Ölen: AOCS-Methode Ca 12-55 | | | | | | | | |
| ⁵⁾ Metallbestimmung in Ölen: AOCS-Methode Ca 18-79 | | | | | | | | |

Das Anwendungsbeispiel 1 macht den hohen Einfluß der Regenerationstemperatur auf die Bleichaktivität des resultierenden Regenerats deutlich. Das nach EP 0 529 555 regenerierte Material verliert gegenüber dem frischen Material deutlich an Aktivität bei der Entfärbung des Öls sowie bei der katalytischen Zersetzung von Peroxiden. Auch die adsorptiven Kapazitäten für Phospholipide, Chlorophyll und Metalle sind im Vergleich zu frischer Bleicherde deutlich vermindert.

Das gemäß DD 109 605 bei hohen Temperaturen regenerierte Material zeigt nahezu keine Bleichaktivität oder Adsorptionsvermögen mehr.

Die erfindungsgemäßen Regenerate weisen dagegen vergleichbare Eigenschaften bei der Entfärbung und bei der Adsorption von Phospholipiden und Chlorophyll, sowie bei der katalytischen Zersetzung von Peroxiden auf. Bei der Adsorption von Metallen, sowie bei der Phospholipidentfernung übertreffen die Regeneratesogar die Kapazitäten der ursprünglichen Bleicherde. Die Ergebnisse belegen, daß das Regenerat bei einer Regenerationstenperatur von 650°C die Bleichaktivität einer frischen Bleicherde erreicht. Besonders günstig wirkt sich die Absenkung der Temperatur im freien Gasraum unter die Wirbelbett-Temperatur aus.

Die frische und die regnerierte Bleicherde (Versuch a) wurden auch hinsichtlich ihrer Teilchengrößenverteilung untersucht. Die mittlere Korngröße der frischen Bleicherde betrug 18,7 µm, die der regenerierten Bleicherde 18,0 µm. Die Wirbelschichtregeneration führt also zu einer geringfügigen Verkleinerung der Bleicherdepartikel, das sich in einer etwas verlängerten Öl-Filtrationsgeschwindigkeit niederschlägt. So beträgt die Filtrationsgeschwindigkeit durch die frische Bleicherde 1'38'', während die Filtrationsgeschwindigkeit durch die regenerierte Bleicherde 2'0'' beträgt. Dieser Einfluß auf die Teilchengrößen ist jedoch nicht gravierend und kann toleriert werden.

Die Filtrationsgeschwindigkeit wurde wie folgt bestimmt: In 100g Öl wurden 10g Bleicherde suspendiert, und die Mischung wurde unter Rühren auf 95°C erwärmt. Nach 10 Minuten wurde die Mischung auf eine Filternutsche (Durchmesser 10 cm) aufgegeben und mit einem Vakuum von 23mbar abfiltriert. Die Zeitspanne, die zur vollständigen Abtrennung der Bleicherde vom Öl benötigt wird, wurde erfaßt.

### Anwendungsbeispiel 2

Das Öl aus Anwendungsbeispiel 1 wurde auch unter den Bedingungen der Naßbleichung gebleicht. Bei dieser Methode wird das Öl mit 1,5 Gew.% Bleicherde versetzt, und die Suspension wird durch Rühren homogenisiert. Unter ständigem Rühren werden dann 0,2 Gew.% Wasser (bezogen auf das Öl) zugegeben, das Gemisch erhitzt und 10min bei 80°C und Atmosphärendruck belassen. Danach wird das System unter Vakuum von 65 mbar gesetzt, auf 90°C aufgeheizt und weitere 30 min gebleicht. Nachdem das Vakuum gebrochen wurde, wird Öl und Bleicherde durch Filtration voneinander getrennt. Die Ergebnisse sind in Tabelle IV zusammengefäßt.

**Tabelle IV**

| Rapsölbleichung mit regeneriertem Tonsil Optimum 210®FF (Naßbleichung) | | | | | | | | |
|---|---|---|---|---|---|---|---|---|
| Bleicherde | Lovibond PFX 990 5 1/4'' | | Chl.A ppm | POZ ppm | P ppm | Fe ppm | Mg ppm | Ca ppm |
| | rot | gelb | | | | | | |
| ungebleicht, filtriert | 3.4 (1'') | 70 (1'') | 3,65 | 16,1 | 62 | 1,3 | 3,8 | 16,5 |
| Tonsil Optimum 210®FF | 2,7 | 39 | 0,10 | 0,1 | 4 | 0,4 | 0,7 | 3,0 |
| Bsp. 1 Versuch a) | 3,2 | 70 | 0,42 | 10,6 | 8 | 0,6 | 1,1 | 4,6 |
| Bsp.1 Versuch b) | 2,1 | 57 | 0,16 | 6,0 | 5 | 0,6 | 0,9 | 3,9 |

Auch dieses Beispiel verdeutlicht die gute Entfärbungsleistung sowie die hohe Adsorptionsleistung der erfindungsgemäß regenerierten Bleicherde. Völlig überraschend steigt bei der Naßbleichung mit erfindungsgemäßen Regeneraten die Entfärbungsleistung im Vergleich zur Vakuumbleichung an.

Eine geringfügige Erhöhung der Regenerationstemperatur von 650°C (Beispiel 1b) auf 700°C (Beispiel 1a) bewirkt bereits einen deutlichen Einbruch bei der Entfärbungsleistung (Lovibond Farbzahl, Chlorophyll A) und der Adsorptionskapazität (Phospholipide, Metalle und Peroxidzahlen)

### Beispiel 2

### Regeneration von gebrauchtem Tonsil Standard®311 in der Wirbelschicht

Gebrauchces Tonsil Standard®311 mit einem Kohlenstoffanteil von 25,1% wurde unter strenger Einhaltung der Temperatur in der Wirbelschicht und im freien Gasraum bei 650°C regeneriert. Die Parameter der Versuchsdurchführung entsprechen den in Beispiel 1 geschilderten. Die Temperaturregelung erfolgte durch Manipulation der Wärmeaustauscher. Die Regenerate wurden hinsichtlich ihrer Oberflächen und Restkohlenstoffgehalte untersucht; die Ergebnisse sind in Tabelle V aufgeführt.

**Tabelle V**

| Regeneration von gebrauchtem Tonsil Standard®311 - physikalische Charakterisierung - | | | |
|---|---|---|---|
| Probe | BET-Oberfläche [m²/g] | BET-Oberflächen-Verlust [%] | C-Gehalt [Gew.%] |
| To. Standard®311 frisch | 227 | - | <0.1 |
| To. Standard®311 regen. | 210 | 7,5 | 1,1 |

### Anwendungsbeispiel 3

### Bleichung von Rapsöl mit regeneriertem Tonsil Standard®311

### - Phospholipidentferung und Fe-Adsorption -

Erfindungsgemäß regenieriertes Tonsil Standard®311 wurde zur Phospholipid-Entfernung sowie zur Fe-Adsorption aus Rapsöl eingesetzt. Hierbei wurde das Öl auf 90°C erhitzt, 1,0% Bleicherde zugegeben und unter 65mbar 30 Minuten gebleicht. Die Ergebnisse der Ölanalyse sind in Tabelle VI zusammengefaßt.

**Tabelle VI**

| Phospholipidentfernung und Fe-Adsorption aus Rapsöl mit regeneriertemTonsil Standard®311 | | | |
|---|---|---|---|
| Bleicherde | Bleicherdemenge (Gew.%) | P (ppm) | Fe (ppm) |
| ohne | - | 7,1 | 275 |
| Tonsil Standard®311 frisch | 1,0 | 3,3 | 150 |
| Tonsil Standard®311 regen. | 1,0 | 2,8 | 138 |

Dieses Beispiel zeigt deutlich, daß die adsorptive Kapazität der regenerierten Bleicherde sogar über der einer frische Bleicherde liegen kann.

### Anwendungsbeispiel 4

### Bleichung von Palmöl mit regeneriertem Tonsil Standard®311

Entschleimtes Palmöl wurde mit frischem und regeneriertem Tonsil Standard®311 gebleicht. Die Bleichbedingungen waren folgende: 110°C Öltemperatur, 50 mbar Vakuum, 2,0 Gew.% Bleicherdeeinwaage, 30 min Bleichdauer. Die Ergebnisse der Bleichversuche sind in Tabelle VII zusammengefaßt.

**Tabelle VII**

| Bleichung von Palmöl mit regeneriertem Tonsil Standard®311 | | | |
|---|---|---|---|
| Bleichmittel | Lovibond PFX 990 5 1/4'' | | Fe (ppm) |
| | rot | gelb | |
| ohne | 27 | 70 | 2,2 |
| Tonsil Standard®311 frisch | 22 | 63 | 1,5 |
| Tonsil Standard®311 regen. | 18 | 63 | 1,2 |

Die erfindungsgemäß regenerierte Bleicherde zeigt bessere Entfärbungsleistung und bessere Metalladsorptionkapazitäten als frische Bleicherde bei der Bleichung von Palmöl.

### Beispiel 3

### Mehrfaches Regenerieren von Tonsil Optimum 210®FF

Mit Tonsil Optimum 210 FF wurde Rapsöl durch Vakuumbleichung wie es in Anwendungsbeispiel 1 beschrieben ist, gebleicht. Die gebrauchte Bleicherde wird im Anschluß daran erfindungsgemäß bei 650°C regeneriert und wieder zur Rapsöl-Bleichung eingesetzt. Auf diese Weise wurden 3 Regenerationscyclen gefahren.

### Anwendungsbeispiel 5

Die Auswirkungen der mehrfachen Regeneration nach Beispiel 3 auf die Bleichaktivität der Bleicherde sind in Tabelle VIII zusammengefaßt.

**Tabelle VIII**

| Mehrfache Regeneration von Tonsil Optimum 210®FF | | | | |
|---|---|---|---|---|
| Bleichmittel | Lovibond PFX 990 rot (5 1/4'') | Chl. A (ppm) | P (ppm) | Fe (ppm) |
| ohne | 9,2 | 0,9 | 15,8 | 1,1 |
| To.Opt.® 210 FF | 2,4 | 0,2 | <0,8 | <0,1 |
| 1. Regeneration | 2,4 | 0,2 | <0,8 | <0,1 |
| 2. Regeneration | 2,7 | 0,3 | <0,8 | <0,1 |
| 3. Regeneration | 2,8 | 0,4 | <0,8 | <0,1 |

Dieses Beispiel belegt die gute Aktivität der Regenerate. Während die Entfärbungsleistung nach den einzelnen Regenerationsschritten etwas nachlaßt, bleibt die Adsorptionsfähigkeit bezüglich Phospholipide und Eisen voll erhalten.

### Beispiel 4

### Mehrfaches Regenerieren von Tonsil Standard®311

Mit Tonsil Standard®311 wurde Rapsöl durch Vakuumbleichung wie es in Anwendungsbeispiel 4 beschrieben ist, gebleicht. Die gebrauchte Bleicherde wird im Anschluß daran erfindungsgemäß regeneriert und wieder zur Rapsöl-Bleichung eingesetzt.

### Anwendungsbeispiel 6

Es wurden 3 Regenerationscyclen gefahren. Die Auswirkungen der mehrfachen Regeneration auf die Bleichaktivität der Bleicherde ist in Tabelle IX zusammengefaßt.

**Tabelle IX**

| Mehrfache Regeneration von Tonsil Standard®311 | | | | |
|---|---|---|---|---|
| Bleichmittel | Lovibond PFX 990 rot (5 1/4'') | Chl. A (ppm) | P (ppm) | Fe (ppm) |
| ohne | 10,2 | 1,1 | 9,3 | 1 |
| Tonsil Standard®311 | 3,3 | 0,5 | <0,8 | <0,1 |
| 1. Regeneration | 3,8 | 0,7 | <0,8 | <0,1 |
| 2. Regeneration | 3,4 | 0,5 | <0,8 | <0,1 |
| 3. Regeneration | 3,8 | 0,7 | <0,8 | <0,1 |

Wie schon im Fall der Regeneration von Tonsil Optimum®210 FF behält regeneriertes Tonsil Standard®311 seine Bleichaktivität über mehrere Regenerationscyclen nahezu bei, die Adsorptionsleistung bleibt voll erhalten.

### Beispiel 5

### Regeneration von gebrauchter synthetischer Bleicherde

Synthetisches Alumosilicat wurde nach EP 0 269 173 Beispiel 1 hergestellt und zur Vakuumbleichung von Rapsöl (Bedingungen analog Beispiel 2, Einwaage 0,5 Gew.% Bleicherde) eingesetzt. Das gebrauchte Alumosilicat wurde anschließend in einen Labor-Wirbelbettcalcinator mit Temperaturkontrolle in der Wirbelschicht und im freien Gasraum bei 650°C regeneriert. Das Regenerat wurde wieder zur Rapsölbleichung eingesetzt.

**Tabelle X**

| Regeneration von gebrauchtem synthetischem Alumosilicat | | | |
|---|---|---|---|
| Bleichmittel | Lovibond PFX 990 (5 1/4'') | | Chl.A (ppm) |
| | rot | gelb | |
| ohne | 11,3 | 70 | 2,29 (1'') |
| Al-Silicat frisch | 3,1 | 70 | 0,1 |
| Al-Silicat regeneriert | 3,0 | 70 | 0,1 |

Es wird deutlich, daß das erfindungsgemäße Verfahren auch zur Regeneration von synthetischen Bleichmitteln Verwendung finden kann.

### Beispiel 6

### Regeneration verschieden vorbehandelter Bleicherden

Gebrauchte Bleicherde von Typ Tonsil Optimum®210 FF wurde vor der eigentlichen, erfindungsgemäßen Regeneration verschieden Vorbehandelt.

Ein Teil wurde durch Erhitzen bei 350°C unter Schutzgasatmosphäre (N₂) pyrolysiert, ein anderer Teil wurde durch Extraktion mit Hexan von löslichen Ölanteilen befreit.

Die so verbehandelten Bleicherden wurden anschließend bei 650°C im Wirbelbett gemäß dem Verfahren und den Bedingungen, wie sie in Beispiel 1 beschrieben sind, regeneriert.

Während der Versuchsdurchführung stellte sich heraus, daß zur Konstanthaltung der Prozeßtemperatur, bei konstant gehaltenem Kühlmittelfluß in den Wärmeaustauschern, die Aufgabemengen der verschiedenen Bleicherden sehr unterschiedlich gewählt werden müssen. Sie nehmen in folgender Reihenfolge ab: unbehandelte Bleicherde (28,5kg/h)- extrahierte Bleicherde (27,0kg/h)- pyrolysierte Bleicherde (19,8kg/h). Um den Fortschritt der Regeneration zu ermitteln, wurde weiterhin der Restkohlenstoffgehalt der Regenerate bestimmt (Tabelle XI).

### Aßwendungsbeispiel 7

Die derart gewonnenen Regenerate wurden zur Vakuumbleichung von Rapsöl eingesetzt (Bedingungen wie in Anwendungsbeispiel 1). Zum Vergleich ist die Bleichaktivität einer vor der Regeneration unbehandelten gebrauchten Bleicherde mit aufgeführt. In Tabelle XI sind die Ergebnisse der Bleichungen und der Kohlenstoffanalyse des Bleichmittels zusammengefaßt:

**Tabelle XI**

| Regeneration verschieden vorbehandelter Bleicherden | | | |
|---|---|---|---|
| Vorbehandlung | Lovibond PFX 990 (5 1/4'') rot | Chl. A (ppm) | C (%) |
| Rohöl | 9,8 | 0,8 | - |
| pyrolysiert, regen. | 5,3 | 0,1 | 2,1 |
| extrahiert, regen. | 5,2 | 0 | 1,3 |
| ohne, regen. | 5,1 | 0 | 0,9 |

Erstaunlicherweise zeigt das regenerierte Pyrolysat, trotz eines vergleichsweise hohen Restkohlenstoffgehaltes, noch hervorragende Bleichaktivitäten.

### Beispiel 7

### Einsatz von Oxidationsmoderatoren während der Regeneration

Die Regeneration von gebrauchtem, pyrolysiertem Tonsil Optimum 210®FF (Beispiel 6, Kohlenstoffgehalt 23%) wurde bei 650°C im Wirbelbett in zwei Ansätzen durchgeführt.

Im ersten Versuch wurde die gebrauchte Bleicherde vor der Regeneration mit Wasser angefeuchtet. Durch Einkneten der berechneten Menge Wasser wurde der Wassergehalt der Mischung auf 25 Gew.% eingestellt. Dieses Gemisch wurde in die Regenerationsanlage mit einer Dosiergeschwindigkeit von 28,0 kg/h eingefahren.

Der zweite Versuch wurde mit dem ursprünglichen Pyrolysat durchgeführt, jedoch wurde über eine Düse im unteren Teil der Wirbelschicht Wasserdampf zudosiert. Die Bleicherde-Aufgabemenge betrug 25,0 kg/h. Die Temperatur im Gasraum betrug jeweils 650°C.

### Anwendungsbeispiel 8

Die erhaltenen Regenerate wurden zur Bleichung von Rapsöl (gemäß Anwendungsbeispiel 1) eingesetzt und die Entfärbungsleistung analysiert:

**Tabelle XII**

| Bleichung von Rapsöl mit regeniertem Tonsil Optimum 210®FF - Einfluß von bei der Regeneration zugesetztem Wasser - | | | |
|---|---|---|---|
| Vorbehandlung | Lovibond PFX 990 (5 1/4'') rot | Chl. A (ppm) | C (%) |
| Rohöl | 9,8 | 0,8 | - |
| pyrolysiert, angefeuchtet (25 Gew.% H₂O) | 5,9 | 0,2 | 13,7 |
| pyrolysiert, Regeneration unter Wasserdampfzugabe | 5,6 | 0,1 | 1,9 |

Die mit dem angefeuchteten Material in den Regenerator eingebrachten Wassermengen sind höher als die durch die kontinuierliche Wasserdampfzugabe eingebrachte Mengen. Durch die dadurch verstärkte Oxidationshemmung werden anteilsmäßig geringere Mengen an Kohlenstoff abgebaut. Erstaunlicherweise ist die beobachtete Entfärbungsleistung beider Regenerate vergleichbar, woraus auf eine ähnliche Temperaturbelastung der Bleicherdepartikel geschlossen werden kann. Trotz im Vergleich zu Beispiel 6 erhöhter Aufgabemenge werden hochaktive Regenerate erhalten.

### Anwendungsbeispiel 9

### Regeneration von mit Altöl beladenen Bleicherden

Ein aus einer industriellen Altöl-Raffination stammendes Flashdestillat wurde mit Tonsil Optimum 216®FF gebleicht. Hierbei wurde das Altöl mit Bleicherde versetzt, unter Rühren auf 280°C erhitzt und 45 min bei einem Vakuum von 180 mBar gebleicht. Nach der Trennung von Bleicherde und Öl wurde die gebrauchte Bleicherde erfindungsgemäß bei 650°C regeneriert (wie nach Beispiel 1 Probe b) und erneut zur Bleichung des Flashdestillates eingesetzt. In Tabelle XIII sind die Ergebnisse aufgeführt.

**Tabelle XIII**

| Bleichung von Altöl (Flashdestillat) mit Tonsil Optimum®216 FF | | |
|---|---|---|
| Bleicherde | Bleicherdemenge (Gew.-%) | Lovibond PFX 990¹⁾ (3,3cm) |
| ungebleicht | - | >8 |
| Tonsil Optimum 216®FF frisch | 7 | 3,7 |
| Tonsil Optimum 216®FF regen. | 9 | 3,8 |

| | | |
|---|---|---|
| ¹⁾ Farbzahl nach ASTM/D1500 | | |

Dieses Beispiel zeigt, daß auch gebrauchte Bleicherden aus der Wiederaufbereitung von Altölen durch die thermische Behandlung in der Wirbelschicht regeneriert werden können.

### Beispiel 8

### Nachbehandlung einer mit Nickel kontaminierten Bleicherdeprobe mit Säure.

Eine gebrauchte, aus der Hydrierung von Sojaöl stammende Bleicherde (Tonsil Standard® 311) wurde gemäß Beispiel 1, Versuch (b) regeneriert. Das derart erhaltene Nickeloxid (0,1 Gew.%) enthaltende Adsorbens wurde in einer wässrigen Suspension (Feststoffgehalt 30 Gew.%) mit 30 Gew.% konzentrierter Salzsäure (bezogen auf Bleicherde) versetzt und 3 Stunden bei 90°C gerührt. Anschließend wurde filtriert und mit Wasser chloridfrei gewaschen. Im gewaschenen Produkt konnte kein Nickel mehr nachgewiesen werden. Mittels Stickstoffadsorbtionsmessung wurde die BET-Oberfläche des unbehandelten- und des mit HCl behandelten Regenerates bestimmt. Durch die nachgeschaltete Säurebehandlung stieg die BET-Oberfläche von 195m² auf 232m²/g an.

## Patentansprüche

1. Verfahren zur Regeneration von gebrauchten anorganischen Adsorbentien, wie Bleicherde bzw. synthetisch hergestellten Adsorbentien und/oder Bleicherde-Aktivkohlemischungen, wobei die den Adsorbentien anhaftenden kohlenstoffhaltigen Reststoffe durch thermische Behandlung in einer ein inertes körniges Material enthaltenden Wirbelschicht bei Temperaturen unterhalb 1000°C oxidiert und von dem Adsorbens entfernt werden, worauf das regenerierte Adsorbens von dem körnigen inerten Material abgetrennt wird, dadurch gekennzeichnet, daß man die Temperatur im Wirbelbett auf etwa 600 bis 700°C und die Temperatur im freien Gasraum auf eine Temperatur, die die Temperatur im Wirbelbett nicht überschreitet, einstellt.

2. Verfahren nach Anspruch 1, dadurch gekennzeichnet, daß man die Temperatur im Wirbelbett auf etwa 630 bis 680°C, insbesondere auf etwa 650°C einstellt.

3. Verfahren nach Anspruch 1 oder 2, dadurch gekennzeichnet, daß man die Temperatur im freien Gasraum auf eine Temperatur unterhalb der Temperatur im Wirbelbett einstellt.

4. Verfahren nach einem der Ansprüche 1 bis 3, dadurch gekennzeichnet, daß man die Temperatur im freien Gasraum auf eine Temperatur einstellt, die um bis zu 50 bis 150°C niedriger ist als die Temperatur im Wirbelbett.

5. Verfahren nach einem der Ansprüche 1 bis 4, dadurch gekennzeichnet, daß man das Adsorbens mehrmals im Wirbelbett rezirkuliert.

6. Verfahren nach einem der Ansprüche 1 bis 5, dadurch gekennzeichnet, daß man das regenerierte Adsorbens nach erneutem Einsatz bei der Adsorption mehrfach regeneriert.

7. Verfahren nach einem der Ansprüche 1 bis 6, dadurch gekennzeichnet, daß man gebrauchte Adsorbentien verwendet, von denen die anhaftenden kohlenstoffhaltigen Reststoffe durch Extraktion und/ oder Pyrolyse teilweise entfernt worden sind.

8. Verfahren nach einem der Ansprüche 1 bis 7, dadurch gekennzeichnet, daß man in das Wirbelbett und/oder in den freien Gasraum Oxidationsmoderatoren, wie Wasserdampf, einführt.

9. Verfahren nach einem der Ansprüche 1 bis 8, dadurch gekennzeichnet, daß man die Temperatur im freien Gasraum und/oder im Wirbelbett durch Wärmeaustauscher einstellt.

10. Verfahren nach einem der Ansprüche 1 bis 9, dadurch gekennzeichnet, daß man die Temperatur im freien Gasraum und/oder im Wirbelbett durch Regelung des Sauerstoffgehalts einstellt.

11. Verfahren nach einem der Ansprüche 1 bis 10, dadurch gekennzeichnet, daß man das regenerierte Adsorbens einer Säurebehandlung unterzieht.

12. Regeneriertes Adsorbens, erhalten nach einem der Ansprüche 1 bis 11.

13. Verwendung des regenerierten Adsorbens nach Anspruch 12 zur Behandlung von Glyceridölen und -fetten, Mineralölen und/oder Wachsen.

14. Verwendung nach Anspruch 13 zur Entfärbung von gefärbten Substraten, zur Adsorption von Pigmenten, Phospholipiden und Metallionen und/oder zur katalytischen Zersetzung von Verunreinigungen, wie Peroxiden.

## Claims

1. A process for the regeneration of used inorganic adsorbents, such as bleaching earth or synthetically prepared adsorbents and/or bleaching earth/active carbon mixtures, wherein the carbon-containing residues, which adhere to the adsorbents, are oxidised by thermal treatment at temperatures below 1,000°C in a fluidised bed containing an inert granular material and are removed from the adsorbent, after which the regenerated adsorbent is separated from the inert granular material, characterised in that the temperature in the fluidised bed is adjusted to approximately 600 to 700°C and the temperature in the free gas space is adjusted to a temperature which does not exceed the temperature in the fluidised bed.

2. A process according to Claim 1, characterised in that the temperature in the fluidised bed is adjusted to approximately 630 to 680°C or, especially, to approximately 650°C.

3. A process according to Claim 1 or 2, characterised in that the temperature in the free gas space is adjusted to a temperature which is below the temperature in the fluidised bed.

4. A process according to any one of Claims 1 to 3, characterised in that the temperature in the free gas space is adjusted to a temperature which is 50 to 150°C lower than the temperature in the fluidised bed.

5. A process according to any one of Claims 1 to 4, characterised in that the adsorbent is circulated several times in the fluidised bed.

6. A process according to any one of Claims 1 to 5, characterised in that the regenerated adsorbent is regenerated several times after renewed usage for adsorption.

7. A process according to any one of Claims 1 to 6, characterised in that used adsorbents are utilised, from which the adhering carbon-containing residues have been partially removed by means of extraction and/or pyrolysis.

8. A process according to any one of Claims 1 to 7, characterised in that oxidation moderators, such as steam, are introduced into the fluidised bed and/or into the free gas space.

9. A process according to any one of Claims 1 to 8, characterised in that the temperature in the free gas space and/or in the fluidised bed is adjusted by means of heat exchangers.

10. A process according to any one of Claims 1 to 9, characterised in that the temperature in the free gas space and/or in the fluidised bed is adjusted by regulating the oxygen content.

11. A process according to any one of Claims 1 to 10, characterised in that the regenerated adsorbent is subjected to an acid treatment.

12. A regenerated adsorbent which is obtained according to any one of Claims 1 to 11.

13. Use of the regenerated adsorbent according to Claim 12 for the treatment of glyceride oils and glyceride fats, mineral oils and/or waxes.

14. Use according to Claim 13 for the decolorisation of coloured substrates, for the adsorption of pigments, phospholipids and metal ions and/or for the catalytic decomposition of impurities, such as peroxides.

## Revendications

1. Procédé pour régénérer des adsorbants inorganiques usagés, tels que la terre décolorante, ou des adsorbants préparés par voie synthétique et/ou des mélanges de terre décolorante et de charbon actif, où les résidus contenant du carbone, qui adhèrent aux adsorbants, sont oxydés, à des températures inférieures à 1000°C, par traitement thermique dans un lit fluidisé contenant un matériau granulaire inerte et sont éliminés de l'adsorbant, ce après quoi l'adsorbant régénéré est séparé du matériau inerte granulaire, caractérisé en ce qu'on ajuste la température dans le lit fluidisé à une valeur d'environ 600 à 700°C, et la température dans l'espace gazeux libre à une valeur qui ne dépasse pas la température dans le lit fluidisé.

2. Procédé selon la revendication 1, caractérisé en ce qu'on ajuste la température dans le lit fluidisé à une valeur d'environ 630 à 680°C, en particulier à environ 650°C.

3. Procédé selon la revendication 1 ou 2, caractérisé en ce qu'on ajuste la température dans l'espace gazeux libre à une température inférieure à la température dans le lit fluidisé.

4. Procédé selon l'une des revendications 1 à 3, caractérisé en ce qu'on ajuste la température dans l'espace gazeux libre à une température qui est de 50 à 150°C inférieure à la température dans le lit fluidisé.

5. Procédé selon l'une des revendications 1 à 4, caractérisé en ce que l'adsorbant recircule plusieurs fois dans le lit fluidisé.

6. Procédé selon l'une des revendications 1 à 5, caractérisé en ce qu'on régénère plusieurs fois l'adsorbant régénéré, après une nouvelle utilisation lors de l'adsorption.

7. Procédé selon l'une des revendications 1 à 6, caractérisé en ce qu'on utilise des adsorbants usagés dont on a partiellement éliminé, par extraction et/ou pyrolyse, les résidus adhérents contenant du carbone.

8. Procédé selon l'une des revendications 1 à 7, caractérisé en ce qu'on introduit dans le lit fluidisé et/ou dans l'espace gazeux libre des modérateurs d'oxydation, tels que la vapeur d'eau.

9. Procédé selon l'une des revendications 1 à 8, caractérisé en ce qu'on ajuste la température dans l'espace gazeux libre et/ou dans le lit fluidisé à l'aide d'échangeurs de chaleur.

10. Procédé selon l'une des revendications 1 à 9, caractérisé en ce qu'on ajuste la température dans l'espace gazeux libre et/ou dans le lit fluidisé par une régulation de la teneur en oxygène.

11. Procédé selon l'une des revendications 1 à 10, caractérisé en ce qu'on soumet l'adsorbant régénéré à un traitement par un acide.

12. Adsorbant régénéré obtenu selon l'une des revendications 1 à 11.

13. Utilisation de l'adsorbant régénéré selon la revendication 12 pour traiter des huiles et graisses à base de glycérides, des huiles minérales et/ou des cires.

14. Utilisation selon la revendication 13 pour décolorer des substrats colorés, pour adsorber des pigments, des phospholipides et des ions métalliques, et/ou pour décomposer par voie catalytique des impuretés telles que les peroxydes.
